# EUROPEAN PATENT APPLICATION

(11) **EP 1 367 096 A1**
(43) Date of publication of application: **03.12.2003**
(21) Application number: 03253054.5
(22) Date of filing: 16.05.2003
(51) Int. Cl.: C08L 95/00, C08K 5/17

(54) **Polymeric asphalt anti-stripping agent**

(30) Priority: 30.05.2002 US 384334 P
(71) Applicant: ROHM AND HAAS COMPANY, Philadelphia, Pennsylvania 19106-2399 (US)
(72) Inventor: Guilbault, Lawrence James, Boxford, Massachusetts 01921 (US); Machleder, Warren Harvey, Blue Bell, Pennsylvania 19422 (US)
(74) Representative: Kent, Venetia Katherine

(57) **Abstract**

A method for improving the anti-stripping properties of an asphalt composition. The method comprises adding to the composition 0.05% to 10% of an amine-substituted polymer having an amine nitrogen content of at least 0.1% and a weight-average molecular weight of at least 5,000.

## Description

### Background

This invention relates generally to a polymeric asphalt anti-stripping agent.

"Stripping" refers to the separation of asphalt from the surfaces of a mineral aggregate mixed with the asphalt. Low molecular weight amines have been reported as asphalt anti-stripping agents, for example, the polyamines and alkoxylated polyamines disclosed in U.S. Pat. No. 4,430,127. However, although the compounds used in this reference have multiple amine substituents, they still are relatively low molecular weight compounds prone to odor problems, smoke generation, and removal from the asphalt, especially in the presence of water.

The problem addressed by this invention is to find an improved asphalt anti-stripping agent.

### Statement of Invention

The present invention is directed to a method for improving the anti-stripping properties of an asphalt composition. The method comprises adding to the composition 0.05% to 10% of an amine-substituted polymer having an amine nitrogen content of at least 0.1% and a weight-average molecular weight of at least 5,000. The present invention is further directed to a composition comprising asphalt, aggregate and 0.05% to 10% of the amine-substituted polymer.

### Detailed Description

All percentages are weight percentages based on the entire composition, unless otherwise indicated. The term "(meth)acrylate" as used herein means methacrylate or acrylate.

The amine nitrogen content of the polymer is determined, as a percentage, from the total weight of all of the nitrogen atoms present in amino groups in the polymer, relative to the total weight of the polymer. The polymer optionally also contains other nitrogen atoms, e.g., nitrogen atoms in amide groups, which do not contribute to the amine nitrogen content. Preferably, the amine nitrogen content of the polymer is at least 0.2%, more preferably at least 0.5%, and most preferably at least 1%. Preferably, the amine nitrogen content of the polymer is no more than 15%, more preferably no more than 10%. Preferably, the amine nitrogen atoms are not substituted by tertiary alkyl groups, or by three groups each having more than two carbon atoms. In a preferred embodiment of the invention, the amine nitrogen atoms occur in amino groups, methylamino groups, dimethylamino groups, ethylamino groups, ethylmethylamino groups, diethylamino groups, ethoxylated and/or propoxylated amino groups, or combinations thereof.

The method of the present invention improves the anti-stripping properties of an asphalt composition, preferably one comprising bitumen and aggregate. The method comprises adding from 0.05% to 10% of an amine-substituted polymer to the asphalt composition. Typically, the amine-substituted polymer is added to the asphalt (bitumen) first, before the asphalt is mixed with the aggregate. Preferably, the amine-substituted polymer is present in the asphalt composition in an amount of at least 0.1%, more preferably at least 0.2%, and most preferably at least 0.3%. Preferably, the amine-substituted polymer is present in an amount of no more than 8%, more preferably no more than 5%, and most preferably no more than 2.5%.

Preferably, the amine nitrogen content of the asphalt composition containing the amine-substituted polymer is at least 0.00025%, more preferably at least 0.0005%, and most preferably at least 0.001%. Preferably, the amine nitrogen content of the asphalt composition containing the amine-substituted polymer is no more than 0.2%, more preferably no more than 0.1%, and most preferably no more than 0.05%.

Preferably, the amine-substituted polymer is not a "comb copolymer." A "comb copolymer," is a type of graft copolymer having a linear, or essentially linear backbone, and graft segments formed by a "macromonomer" attached to the linear polymer backbone. A "macromonomer" is any low molecular weight water-insoluble polymer or copolymer having at least one terminal functionality capable of covalently bonding with functionality on another polymer or monomer so as to form a graft copolymer.

The weight-average molecular weight of the amine-substituted polymer is at least 5,000. Preferably, the weight-average molecular weight of the polymer is at least 6,000, more preferably at least 10,000, and most preferably at least 30,000. Preferably, the weight-average molecular weight of the polymer is no more than 2,000,000, more preferably no more than 1,000,000, more preferably no more than 500,000, and most preferably no more than 200,000.

The amine-substituted polymer comprises monomer residues derived from polymerization of at least one monomer, either by addition or condensation polymerization. Preferably, at least one of the monomers contains an amine functionality, or a functionality that can easily be converted to an amine after polymerization, e.g., a carbamate which can be converted to the amine by hydrolysis. Optionally, an amine functional group is introduced into the polymer by reaction of an amine-containing reagent with a functional group on the polymer. Amine-substituted polymers are described, for example, in the sections titled "Amines", "Amino Resins" and "Polyamines" in the Encyclopedia of Polymer Science and Technology (John Wiley, publisher). Examples of monomers for addition polymerization which contain amine functional groups include, but are not limited to, amine-substituted (meth)acrylamides, amine-substituted (meth)acrylate esters, vinyl carbamates, vinyl acetamides, allyl amines, aziridines, amine-substituted styrenes and vinylpyridines. Particularly preferred monomers are the alkyl- or dialkyl-aminoalkyl (meth)acrylate esters, especially the alkyl- or dialkyl-aminoethyl (meth)acrylate esters and the alkyl- or dialkyl-aminopropyl (meth)acrylate esters. Preferably, alkyl groups in amine-substituted monomers are C₁-C₈ mono- or di-valent alkyl groups. An addition polymer used in this invention comprises a copolymer of an amine-substituted monomer and at least one other monomer, preferably one with a similar reactivity. Particularly preferred copolymers are those formed from alkyl- or dialkyl-aminoalkyl (meth)acrylate esters and (meth)acrylate esters not having amino substituents. Preferably, the amine-substituted polymer is a copolymer in which residues of alkyl- or dialkyl-aminoalkyl (meth)acrylate esters and non-amine-substituted (meth)acrylate esters collectively comprise at least 50% of the copolymer. Examples of (meth)acrylate esters not having amino substituents include, but are not limited to, C₁-C₂₀ alkyl (meth)acrylate esters, hydroxyalkyl (meth)acrylates and (meth)acrylamide. Styrenic monomers, vinyl acetate and vinyl pyrrolidone also are suitable as comonomers. Examples of monomers for condensation polymerization which contain amine functional groups include, but are not limited to, diamines and polyamines. Diamines and polyamines typically form condensation polymers on reaction with alkyl dihalides or halo-epoxy monomers, e.g., epichlorohydrin. Preferably, the polymer is not a condensation product formed from phenols and aldehydes. Preferably, the polymer is an addition polymer, more preferably one in which at least 20% of the monomer residues are (meth)acrylate residues, more preferably at least 50%, more preferably at least 90%, more preferably at least 95%, and most preferably, substantially all of the monomer residues in the copolymer are (meth)acrylate residues. Preferably, less than 10% of the monomer residues are derived from (meth)acrylic acid or other acidic monomers, more preferably less than 2%, and most preferably less than 1%.

### Example: Amine-Containing Methacrylate Polymer

A copolymer of 85% stearyl methacrylate and 15% 3-dimethylaminopropyl methacrylate, having a weight-average molecular weight of 30,000 was tested at 0.5% in asphalt cement (17.8 g PG 64-22 asphalt cement and 251 g aggregate: 47.7 g ―100 mesh M-10 fines, 67.8 g +100 mesh M-10 fines, 47.7 g +8 mesh M-10 fines and 87.8 g +4 mesh stone) according to Georgia Department of Transportation Test No. 56 for evaluation of heat-stable anti-strip additives.
The asphalt cement retained greater than 90% coverage.

## Claims

1. A method for improving the anti-stripping properties of an asphalt composition; said method comprising adding to said asphalt composition 0.05% to 10% of an amine-substituted polymer having an amine nitrogen content of at least 0.1% and a weight-average molecular weight of at least 5,000.

2. The method of claim 1 in which the weight-average molecular weight of the amine-substituted polymer is from 6,000 to 2,000,000.

3. The method of claim 1 in which the amine nitrogen content of the amine-substituted polymer is at least 0.2% and no more than 15%.

4. The method of claim 1 in which the amine-substituted polymer is an addition polymer.

5. The method of claim 4 in which the amine-substituted polymer is a copolymer in which residues of alkyl- or dialkyl-aminoalkyl (meth)acrylate esters and non-amine-substituted (meth)acrylate esters collectively comprise at least 50% of the copolymer.

6. The method of claim 5 in which the amine-substituted polymer is present in an amount from 0.1% to 5%.

7. The method of claim 6 in which the weight-average molecular weight of the amine-substituted polymer is from 6,000 to 2,000,000.

8. The method of claim 7 in which the amine nitrogen content of the amine-substituted polymer is at least 0.2% and no more than 10%.
